# EUROPEAN PATENT APPLICATION

(11) **EP 4 751 546 A2**
(43) Date of publication of application: **03.06.2026**
(21) Application number: 25208594.9
(22) Date of filing: 14.10.2025
(51) Int. Cl.: A01D 34/43, A01D 34/535, A01D 34/835

(54) **FLAIL MOWER AND METHOD FOR BALANCING THE SHAFT**

(30) Priority: 28.11.2024 PL 45038424
(71) Applicant: Lisicki Spolka z Ograniczona Odpowiedzialnoscia, 96-200 Rawa Mazowiecka (PL)
(72) Inventor: Lisicki, Janusz, 96-200 Rawa Mazowiecka (PL); Lisicki, Krzysztof, 96-200 Rawa Mazowiecka (PL)
(74) Representative: JWP Patent & Trademark Attorneys

(57) **Abstract**

The invention presents a solution of a flail mower having a body 1, a suspension frame 3, a hinged cover 4 with a flail shaft 8 arranged inside the body 1, characterized in that the suspension frame 3 is slidably mounted on the body 1 with at least one rail 101 with kidney slots 102, and also, the cover 4 is locked in a given position using locknuts 46 located on the side wall of the machine body 1, wherein the screwed locknut 46 clamps the lock screw 44 on the side wall of the side 41, and in the side 41 there is a radial kidney slot 42 smoothly positioning the cover 4, furthermore, support flanges 82 with holes are welded before balancing at two ends of the flail shaft 8, to which the balancing weights 83 are then screwed. The present invention also presents a shaft balancing method.

## Description

The object of the present invention is a flail mower and a shaft balancing method. The flail mower group concerns the field related to mowing green crops, wastelands and shredding and mulching of crop residues or small branches.

In the prior art, DE102023100224 A1 describes a machine used in agriculture or forestry. It has a housing containing a rotating tool carrier with tools attached to it. The tool carrier rotates parallel to the ground and crushes the material it is in contact with. The housing has at least two side walls, one of which faces the shredding area. This side wall consists of two parts, the first part, which is parallel to the direction of movement of the machine, and the second part, which forms an angle between 30°-70° with the direction of movement. Both portions of the sidewall are inclined forward in the direction of movement, with the upper portion of the second wall section also facing forward. This second wall section is followed by a third wall section parallel to the direction of movement and a first side wall section.

CN206611784 U discloses an invention that presents a side-sliding mower that is provided with a guide rail, one side of the guide rail being provided with a sliding hydraulic cylinder. The enclosure flap is opened.

GB2483574 B discloses a flail mower that allows cutting plants of different lengths. The mower comprises a housing with a cavity, flail cutting blades movably fixed within the cavity, a drive system for controlling the movement of flail blades within the cavity, and may move between the first cutting configuration and the second cutting configuration.

From the description of the document CN208258426 U a mower is known with side movement and a rear flap, which can cut and crush the material more efficiently. It is designed to be connected to a tractor and uses a transmission system to rotate the blade and cut weeds. It also has a lifting platform that can collect weeds for secondary cutting and crushing. In addition, it has the ability to move sideways, which allows for more efficient mowing. The fixing plate has slots into which the lifting plates can be inserted and the fixing element is placed in the fixing hole in the lifting plate. The fixing plate has a plurality of vertically spaced slots.

CN208063801 U discloses a side-moving mower with an opening rear cover that is designed to be more powerful and versatile. It can be attached to a tractor. It is equipped with a rotating shaft and a gearbox driving the cutting knives. It also has a unique tailgate function that can be lifted to increase the ejection area, allowing for better cutting of dense weeds and greater productivity.

US 10996128B2 discloses a method of fixing counterweights on a rotating shaft to ensure that it rotates evenly. First, the shaft is placed in a device that allows it to rotate. As the shaft rotates, the system checks for any imbalances and calculates where and how much weight is needed to balance it. Basing on this information, the display shows the operator where to place the counterweights. Then the operator moves the balancing device to the indicated place, fixes the appropriate counterweight and secures it to the shaft. This process can be repeated for different areas on the shaft until it is completely balanced.

US7571703B2 describes an invention that relates to a special type of balancing roller used in machines. It has a balancing weight placed between the two cylindrical parts to help it rotate smoothly. A unique feature of this balancing weight is that its centre of gravity is not aligned with the axis of rotation of the roller, which helps to reduce vibration. The ends of the balancing weight have the shape of wheel segments, so that they are wider than the middle part, which is more oval. This design allows the weight to taper from the ends towards the centre. The outer surface of the weight is straight, which helps to maintain balance during rotation.

The solutions to date presenting flail mowers require the use of sophisticated connections of many elements of the system and are difficult to operate and service. The construction thereof is very complex, expensive and time-consuming. Due to the need to simplify the design, facilitate operation and extend the product's service life, new solutions for the mower have been proposed.

The solution to the above limitations is to use a mower design that is simple in construction, economical to manufacture, and easy to operate and maintain. It has a number of solutions ensuring high functionality and ergonomics. It provides high reliability and a wide spectrum of adjustment of operating parameters.

In addition, a common problem in lawnmowers is the lack of balance or imprecise balancing of the shaft (e.g. above 100g), which leads to faster wear of consumable parts such as bearings on which the shaft is mounted. In extreme cases, vibrations caused by imbalance can lead to loosening of screw connections or even cracking of the machine body. The traditional balancing known in the prior art consists in determining the underweight using a dynamic balancing machine dedicated to flail shafts, and then welding the appropriate weight of the weights to the flail shaft in the places indicated by the machine. This method involves the risk of deformation of the shaft when welding the weights, which significantly complicates the balancing process and makes it difficult to obtain low underweight values.

The technical problems indicated are solved by the present invention by providing an improved and versatile structure devoid of the defects found in the solutions known to date.

The object of the present invention is also to attain a versatile, economically efficient, simple to use, and durable device resistant to operational damage and cheaper to manufacture. The aim is also to ensure a method of balancing the shaft that is free from defects such as the formation of thermal stresses. The aim is to speed up the shaft balancing process, without having to wait for the shaft to cool down repeatedly after welding the weights. The aim is to avoid the inconvenience of prior art in welding, which is problematic and causes deformation of the shaft. The aim is to obtain the ability to carry out subsequent balancing processes that do not require cutting off old weights and welding new ones.

The essence of the invention is a flail mower having a body, a suspension frame, a hinged cover, with a flail shaft arranged inside the body, characterized in that the suspension frame is slidably mounted on the body using at least one rail with kidney slots, and also, the cover is locked in a given position with locknuts located on the side wall of the machine body, wherein the screwed locnkut clamps the lock screw on the side wall of the side, and in the side there is a kidney slot smoothly positioning the cover, furthermore, support flanges with holes are welded before balancing at two ends of the flail shaft, to which the balancing weights are then screwed.

Preferably, the attachment of the suspension frame to the machine body comprises a rail, a kidney slot, a kidney slot sliding mounting, a kidney slot support mounting, an actuator, an actuator bar.

Preferably, kidney slot sliding mountings are inserted into the kidney slots of the rails, which are sliding inside the kidney slots from the bottom of the rail and kidney slot support mountings are flush with kidney slot sliding mountings, at the same time a suspension frame is attached to the rails.

Preferably, the flail hammers are arranged sequentially on the flail shaft and secured along two opposing helical lines, using the flail hammer mounting lugs welded to the shaft in a suitable helical sequence.

Preferably, the arranged flanges are alternating, wherein each flange is provided with rows of mounting holes for positioning and screwing the weight.

Preferably, the movement of the suspension frame relative to the body is carried out hydraulically using the actuator.

Preferably, the body is mounted on side skids that are adjustable relative to the body.

Preferably, a bearing-mounted following and compacting roller is attached to the side skids.

Preferably, a scraper is mounted between the skids with an adjustable gap between the edge of the scraper and the following shaft.

Preferably, in the cover, the stone of the cover is embedded on the lock screw and placed inside the kidney slot, and the square neck of the lock screw is embedded in the square hole of the side wall of the body.

Preferably, the flail shaft has central weights screwed directly to the attachment lugs.

It is preferable that the drive of the flail shaft rotating in the opposite direction of travel is transmitted through the angular transmission, the bearing sleeve and the V-belts.

Preferably, the arrangement of the flail hammers on the flail shaft covers approximately 15 ÷ 25% of the working width of the flail hammer.

Preferably, a key cover is attached to the body.

The essence of the invention is a method for balancing a shaft, which comprises the following steps:
a) Performing the required welding activities on the shaft related to the welding of the necessary elements,
b) Shaft cooling-period of thermal stabilization after welding,
c) Equipping the shaft with the desired elements,
d) Shaft balancing using the balancer-verification of parameters from the shaft balancing measurement,
e) Selection of balancing weights according to the indications of the balancer,
f) Mounting of the balancing weights in a defined place on the shaft, characterized in that
   in stage a) additional welding of the load-bearing flanges alternating on the shaft is carried out, and the appropriate attachment of the balancing weights in stage f) consists in screwing the appropriate weights to the load-bearing flanges in the previously designed holes, without the need to perform another welding process,
g) Angular alignment of the weights on the support flanges,
h) Verification of balancing and checking the selection of balancing weights on the support flanges in the full angular range of 360° of the shaft circumference.

Preferably, additional central weights are attached by being screwed to the attachment lugs via the mounting screws.

The advantage of the invention and its beneficial effects compared to known solutions is that operation has been simplified and the service life of the device has been increased, ensuring better functionality and cost efficiency. The advantage of the invention and its beneficial effects compared to known solutions is that, in addition to avoiding the risk of deformation during welding of weights onto the shaft, the created system and method of balancing also eliminates the time delays required for thermal stabilisation after welding. The subsequent balancing of the shaft also does not require cutting off old weights and welding new ones. The advantage is that the parameters of the shaft and the material do not deteriorate under the influence of welding and heating.

An embodiment of the invention is visualized in the drawing, in which:
- Figs 1a and 1b present a front and rear perspective view of the mower,
- Fig. 2 shows the attachment of the mower to the tractor with an indication of the direction of movement,
- Figs 3a and 3b present a top view of the mower hidden and extended in relation to the tractor,
- Figs 4a and 4b show the lateral displacement adjustment system,
- Figs 5a and 5b and 5c illustrate a cover tilting system,
- Figs 6a and 6b and 6c and 6d present views of the flail shaft,
- Fig. 7 shows a partial view of a mower with a side skid,

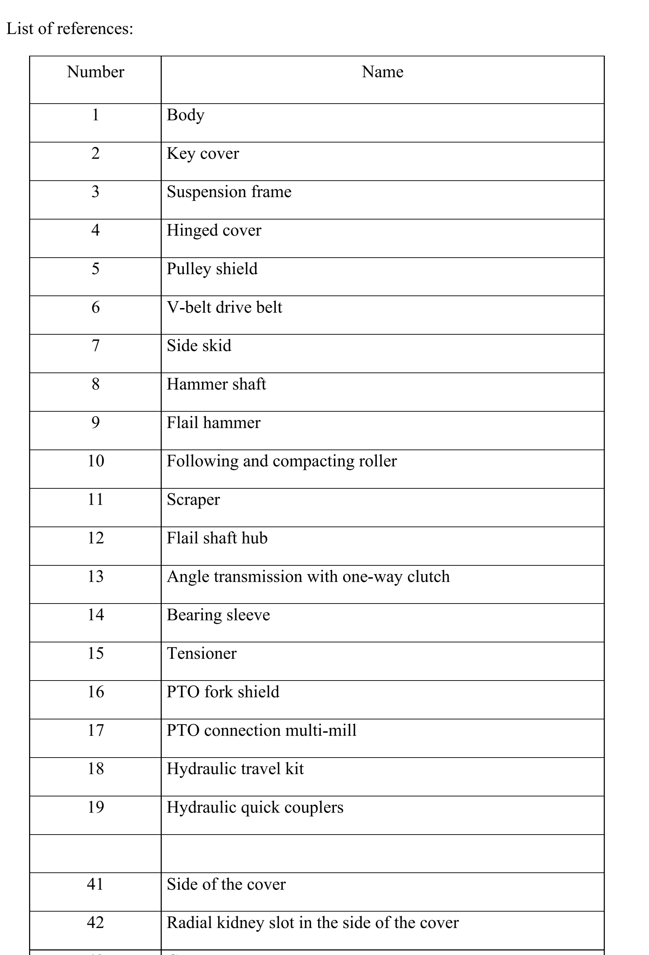

- Fig. 7 shows a partial view of the elements inside the body.

The present invention presents a solution for the construction of a mower. A group of mowers, especially flail mowers, has been designed for mowing green fodders, wastelands, and shredding and mulching crop residues or small branches, among other things. It is a machine that is simple in construction, easy to operate and equipped with a number of solutions ensuring high functionality and ergonomics. In addition, it provides a plurality of working widths, in an exemplary preferred range from about 1.0 to about 2.4 meters.

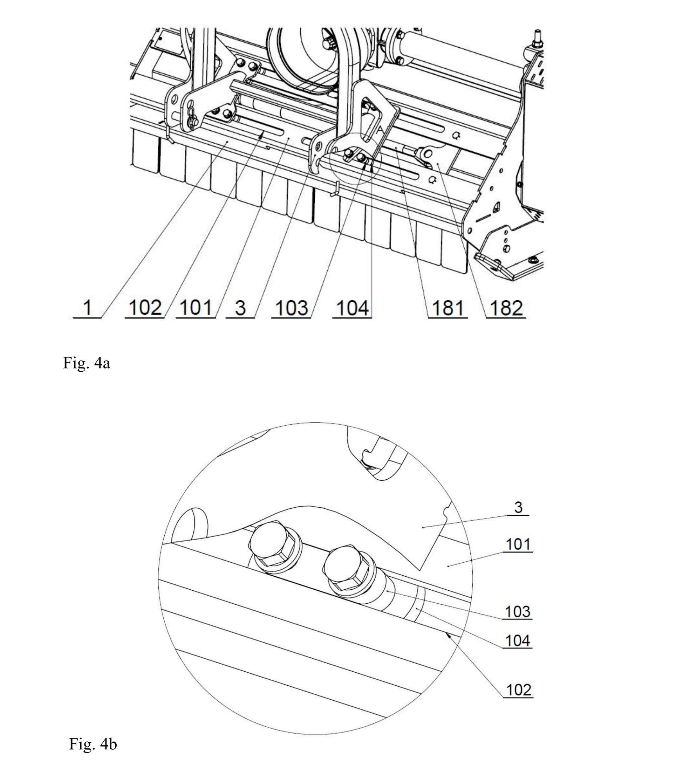

One embodiment of the present invention, as generally illustrated in Figs 1a and 1b, includes, but is not limited to: a body 1, a key cover 2, a suspension frame 3, a hinged cover 4, a pulley shield 5, a drive V-belt 6, a side skid 7. In addition, the device includes: a flail shaft 8, a flail hammer 9, a copy and crimp shaft 10, a scraper 11, a flail shaft hub 12, an angular transmission 13 with a one-way clutch, a bearing sleeve 14, a tensioner 15, a PTO fork cover 16, a PTO connection multi-mill 17. In alternative embodiments, it may be provided with a hydraulic travel optional kit 18, optional hydraulic quick couplers 19.

The mower is connected to the tractor via the suspension frame 3. The suspension frame 3 is slidably mounted on the body 1. The stepless movement of the suspension frame 3 relative to the body 1 can be carried out manually. In alternative preferred embodiments of the invention, the stepless travel of the suspension frame 3 relative to the body 1 may be carried out hydraulically as optional equipment. The body 1 is mounted on the side skids 7, the adjustment of which relative to the body 1 allows different mowing heights to be obtained. Changing the mowing height takes place in a three-stage range and, for example, these may be values preferably about 10, 35, 60 mm, etc., and consists in changing the position of the side skids relative to the machine frame using the side positioning holes located in the sides of the side skids 7, as seen in fig. 7, showing the mower body 1, the side skid 7, the positioning hole 71, the positioning screw 72 with the locknut. The given mowing height is set depending on the kind of performed work. Maintenance works (mowing lawns)-use low settings. Mowing wastelands-where there are large uneven areas and the risk of stones-use the highest settings. Setting the maximum mowing height reduces the load on the cooperating tractor. It also allows you to increase the multitasking of the mower. The purpose of the flail mower is, among others: mowing low-stemmed plants (grasses, alfalfa) on permanent grasslands, mowing agricultural wastelands covered with thin-stemmed shrubs or self-seeding grasses, mulching corn and tobacco stubbles, mulching low aftercrops (lupins, facelia, mustard), mowing urban green areas, squares, parks, roadsides, shredding thin, not hardened branches in orchards.

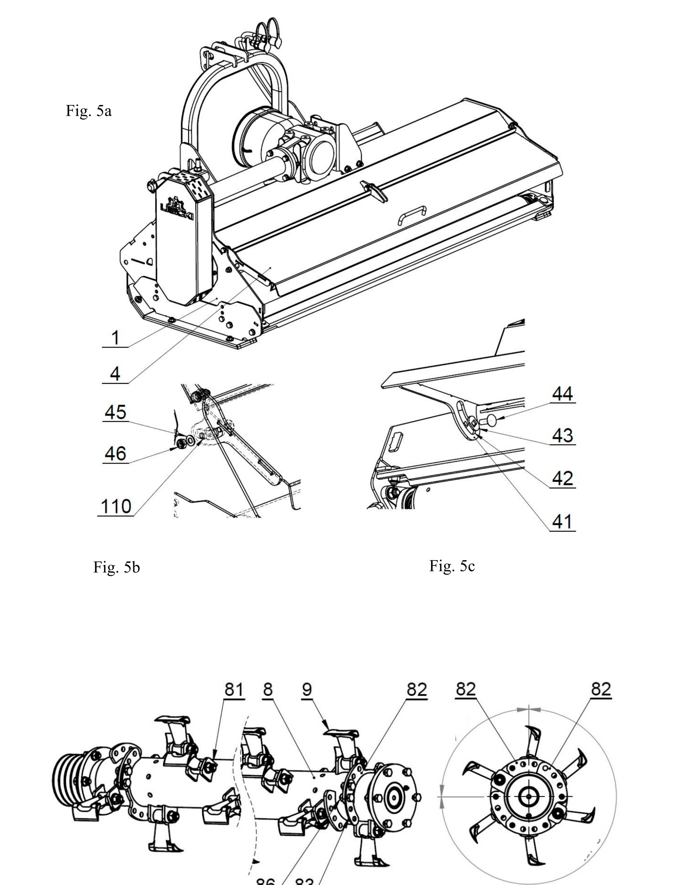

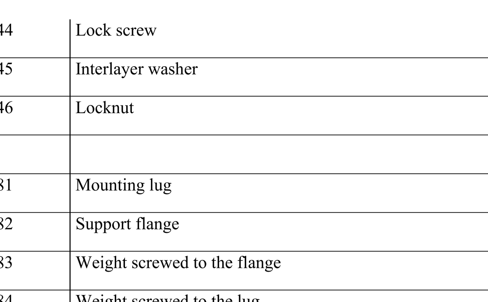

A bearing-mounted following and compacting shaft 10 is attached to the side skids 7. By changing the position of the side skids 7, the position of the following and compacting roller 10 is changed simultaneously. The drive of the flail shaft 8 is obtained from the tractor via successively: angular transmission 13, bearing sleeve 14 and V-belts 6. The flail shaft 8 is bearing in the machine body via the shaft hubs 12. The mower is equipped with a hinged rear cover 4, the opening of which facilitates the evacuation of the mulched material, which reduces the load on the tractor. In addition, the scraper 11 is mounted between the skids, the task of which is to remove glued remnants of material and soil from the following roller. As illustrated in Fig. 8, the system shows, among others, the mower body 1, the side skid 7, the following roller 10, the scraper 11, the adjustment elongate hole 73, the scraper mounting screws 74. The scraper 11 is mounted on the lugs of the side skids 7, in which longitudinal holes 73 are made to adjust the gap between the edge of the scraper 11 and the following roller 10, as illustrated in fig. 8. The key cover 2 protecting the tractor against outgoing mowed material is permanently welded into the machine body 1. The flail shaft 8 rotates in the opposite direction of travel, as illustrated in Fig. 2. Mounting lugs 81 of the flail hammers 9 are welded to the shaft 8 in a suitable spiral sequence. In order to increase the versatility of the mower, lighter hammers, preferably about 700g, are introduced in place of large hammers, such as 1700g, and their number is increased. The angular distance between hammers is reduced from 90° to about 60° (preferably, e.g., 6 on the perimeter). A "overlap" of the flail hammers 9 with a value preferably between 15 ÷ 25% of the working width of the flail hammer 9 has been introduced. The hammer fixings are arranged along two opposing helical lines. Fig. 6d shows an example of a spiral sequence of mounting lugs: C-arrangement of the mounting lug pairs of the first screw line, D-arrangement of the mounting lug pairs of the second screw line. As a result, stable, even operation of the mower was achieved, no strokes of individual hammers, extended life of the mower drive unit, accurate shredding of branches, mowing without missed spots (points of unmowed grass), possibility of using a tractor with lower power, lower load on the cooperating tractor.

Flail hammers 9 rotatably screwed to the shaft 8 with blades directed in the direction of rotation of the shaft 8 cause shearing of the mowed material and shredding of remnants. The mower has an innovative design due to the special mounting of the suspension frame 3 on the body 1, which is different from the common solutions, which are of the type of rigidly screwed suspension frame to the body or sliding through precision pipes and guide bushes. The mower according to the invention uses rails 101 with kidney slots 102 allowing for stepless travel of the suspension frame 3 relative to the body 1. Thanks to this, it was possible to mow the field directly behind the tractor or laterally when the mower is extended to the side of the tractor, such as to the right side of the tractor. This function is used when mowing under trees, where you can work several centimetres from the tree line. Operating position of the mower: A-central position, B-lateral position is schematically depicted in Figures 3a and 3b. For example, the stroke of mowers, preferably with a working width of 1.0 - 1.6 m may be 350 mm, and the stroke of mowers preferably with a working width of 1.8 - 2.4 m may be 400 mm.

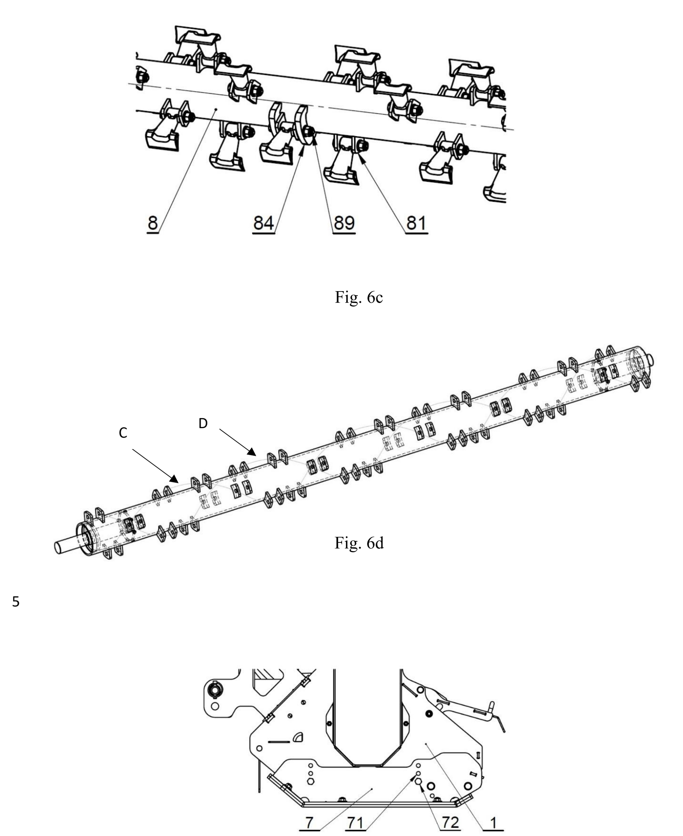

The following Figures 4a, 4b show the attachment of the suspension frame 3 to the machine body 1, which includes, among others, the rail 101, the kidney slot 102, the kidney slot sliding mounting 103, the kidney slot support mounting 104, an actuator 181, an actuator bar 182. The system also has a set of locking and fixing elements in the form of, for example, threads, washers, nuts, bolts. The arrangement of sliding rails and beans allows to achieve the versatility of the machine while maintaining simplicity of execution and low production costs. The machine body 1 has two rails 101 mounted, preferably welded in parallel with each other. In each of the rails 101, two longitudinal bean holes 102 are made with a length allowing for the movement of the suspension frame 3 by an example value of about 350mm preferably for mowers in the range of approx. 1.0 ÷ 1.6m, or for example by a value of about 400mm preferably for mowers of approx. 1.8 ÷ 2.4m, wherein these values are not limiting and it is possible to select other parameters of the suspension frame 3. Kidney slot sliding mountings 103 are inserted into the kidney slot 102, which slide inside the kidney slots 102. From the bottom of the rail 101, kidney slot support mountings 104 are located flush with the kidney slot sliding mountings 103. The suspension frame 3 is placed on the rails 101, in the base of which through holes are made with a spacing corresponding to the spacing of the holes in the kidney slot sliding mountings 103 and kidney slot support mountings 104. The whole is connected and preferably fastened with screws that are inserted into the holes in the base of the suspension frame 3 and pass through the through holes of the kidney slot sliding mountings 103 and the threaded holes of the kidney slot support mountings 104. In alternative embodiments, when the mower is equipped with hydraulic displacement, kidney slot sliding mountings 103 are used, preferably with a thickness greater by approximately 1 to 2 mm than the rails 101, in order to ensure constant clearance allowing free movement of the suspension frame 3 relative to the body 1. The hydraulic cylinder is a protection against accidental displacement of the suspension frame 3. In the basic embodiment, the mower has a manual movement, where kidney slot sliding mountings 103 with a thickness smaller, preferably by about 1 ÷ 2 mm than the thickness of the rails 101 are used. Correct connection, especially tightening the screws between the suspension frame 3 and the kidney slot support mountings 104, causes clamping on the rails 101, which prevents accidental movement of the suspension frame 3 during operation. Each time the operator wants to move the suspension frame 3 relative to the body 1, he must loosen the screws. The entire system of rails 101, kidney slots 102, kidney slot sliding mountings 103 and kidney slot support mountings 104 was designed taking into account the clearances between the individual parts, preferably at a level of about 0.5 ÷ 2 mm. This allows all parts to be protected in the powder coating room and does not require lubrication of the kidney slots 102. After the end of the agricultural season, it is only necessary to protect surfaces that have been stripped of paint with a protective coating, preferably enamel.

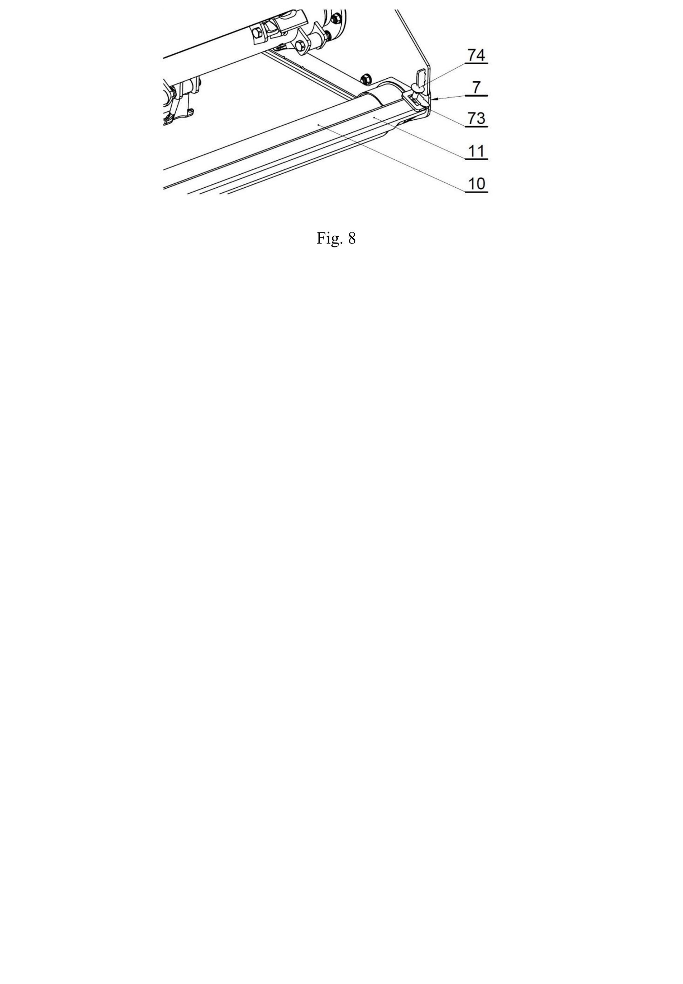

The machine structure according to one further alternative embodiment has a rear cover adjustment system, as generally shown in Fig. 5a, 5b, 5c. This solution provides the possibility to lock the rear cover 4 in the closed, open or any intermediate position. Unlocking or locking of the cover 4 is carried out by loosening or tightening the locknut 46 located on the side wall of the machine body 1. Tightening the locknut 46 clamps the head of the lock screw 44 on the side wall of the side 41 of the cover. In the side 41 of the cover, a radial kidney slot 42 is made, which allows for smooth positioning of the cover in the open-closed range. The open position of the cover 4 is used when mowing tall grasses and wastelands, when there are no third parties, buildings, roads or other objects nearby that could be hit by randomly thrown material. The stone 43 of the cover embedded on the lock screw 44 and placed inside the kidney slot 42 limits the stroke of the cover 4. The square neck of the lock screw 44 is also embedded in the square hole 110 of the side wall of the body 1. Alternatively, it could be another polygon shape that limits rotation. This prevents the lock screw 44 from turning when tightening/loosening the locknut 46. This allows the use of only one spanner, such as a known combination spanner, box spanner, etc., when adjusting the cover 4, and the entire operation is performed only outside the mower without the need to reach the working chamber around the flail shaft.

In addition, one further alternative embodiment of the invention uses an innovative system for balancing flail shafts 8, as illustrated in Fig. 6a, 6b, 6c and the method of balancing the shaft is important. The shaft balancing process comprises the following stages:
a) Performing all welding activities on the shaft related to welding of fastening elements, such as brackets or lugs of flails 81, etc. elements-as needed, and other elements requiring welding in the desired sequence,
b) Shaft cooling-thermal stabilisation period after welding, parameter verification
c) Equipping the shaft with actuators, such as flail hammers 9 or other desirable elements, if required, attaching the elements to previously welded fastening elements,
d) Shaft balancing on the balancing machine-checking the shaft balancing measurement results, analysis of measurements
e) Selection of balancing weights based on the balancing machine readings and analysed parametric results,
f) Attaching the balancing weights in the designated place on the shaft, wherein, according to the method of the invention, in stage a) additional welding of the flanges, the load-bearing flanges 82 alternating on the shaft is carried out, and the balancing from stage d) and the attachment of the balancing weights from stage f) consists in screwing the appropriate weights 83 to the load-bearing flanges 82 in the previously designed holes, without the need to perform another welding process adversely affecting the formation of thermal stresses, without extending the cooling time,
g) Angular positioning of the weights 83 on the support flanges 82, and securing them,
h) Verification of balancing and checking the selection of balancing weights over the full 360° angular range of the shaft circumference, and in particular verification of balancing and checking the selection of 83 balancing weights on 82 support flanges over the full 360° angular range of the shaft circumference.

In alternative embodiments of the method, in order to eliminate gross underweight, central weights 84 are preferably attached directly to the attachment lugs 81 by means of longer mounting screws 89.

The created innovative system for the mower consists in welding the support flanges 82 at the two ends of the flail shaft pipe 8. The support flanges 82 are welded at the stage of welding the lugs of the flails 81. The technical advantage of welding the support flanges 82 at the stage of welding the lugs 81 securing the flail hammers 9 is the lack of welding treatments at the stage of balancing the shaft 8. The technology of making the correct flail shaft 8 requires its balancing on a special balancer. Shaft 8 must then be equipped with flail hammers 9. Traditional balancing involves welding the weights to the surface of the flail pipe during balancing. Unfortunately, each welding is problematic and causes deformation of the shaft. To illustrate the scale of the problem, it can be assumed that in the case where the shaft is underweight 110g, a 110g weight is selected and welded to the shaft in a place designated by the balancing machine. After cooling, it turns out that the welding itself bent the shaft at the welding site by 0.2 mm and although theoretically the shaft should be balanced, the underweight moved to another place, e.g. 30g. To address these issues, one embodiment uses flanges 82 welded at an earlier stage, which allow weights 83 to be bolted on instead of being welded, thus avoiding the aforementioned deformations. The alternating arrangement of the flanges 82, wherein each flange 82 is equipped with a row of mounting holes, facilitates positioning and screwing the weight 83 exactly in an angular position on the perimeter of the shaft 8 as indicated by the balancing machine. The arrangement of the support flanges 82 is alternating, on their surface there are holes for screwing the weights 83 with fastening/mounting screws 86. This arrangement allows the weights 83 to be screwed on over the full 360° angle of the flail shaft 8 circumference. The flail shaft 8 with the flail hammers 9 mounted is checked on the balancer, the weights 83 are bolted to the support flanges 82 of the respective weight in the respective angular position of the flail shaft 8. In alternative embodiments, it is preferably sufficient to tighten the mounting screw 86 alone. In alternative embodiments, in order to compensate for gross underweight, central weights 84 are additionally designed to be screwed directly to the mounting lugs 81 by means of longer mounting screws 89. Each weight 83 fastening bolt is secured with a self-locking nut. Similarly as the screws securing the flail hammers 9. In addition to avoiding the risk of deformation during welding of weights, the created system also eliminates time delays required for thermal stabilisation after welding. The subsequent balancing of the shaft also does not require cutting off old weights and welding new ones. Subsequent balancing after replacing the flail hammers 9 also does not require cutting off the old weights and welding on new ones. The balancing system allows to obtain underweight preferably below 10g, because underweight, and especially underweight above 50g, regardless of the size of the shaft, can cause problems when working in the field. Under heavy load from the mulched material, the shaft will tend to deform elastically in the angular direction where there is excess weight, thereby increasing imbalance and, consequently, vibrations and wear on the bearings and drive. Through the solution in accordance with the variants of the invention, a machine free from defects occurring in the known state of the art was obtained.

The subject invention of a flail mower with the solutions used therein is applicable to mowing green fodders, wastelands, and shredding and mulching crop residues or small branches, mowing low-stemmed plants (grass, alfalfa) on permanent grasslands, mowing agricultural wastelands covered with thin-stemmed shrubs or self-seeding grasses, mulching corn and tobacco stubbles, mulching low aftercrops (lupins, phacelia, mustard), mowing urban green areas, squares, parks, roadsides, shredding thin, non-hardened branches in orchards. The shaft balancing method is used in the balancing of shafts, flail shafts and others, where balancing weights are attached to the shaft during balancing.

The present invention is not limited only to the embodiments shown above. Various modifications and developments thereof are possible within the scope of the appended claims, without departing from the essence of the present invention.

### List of references:

| Number | Name |
|---|---|
| 1 | Body |
| 2 | Key cover |
| 3 | Suspension frame |
| 4 | Hinged cover |
| 5 | Pulley shield |
| 6 | V-belt drive belt |
| 7 | Side skid |
| 8 | Hammer shaft |
| 9 | Flail hammer |
| 10 | Following and compacting roller |
| 11 | Scraper |
| 12 | Flail shaft hub |
| 13 | Angle transmission with one-way clutch |
| 14 | Bearing sleeve |
| 15 | Tensioner |
| 16 | PTO fork shield |
| 17 | PTO connection multi-mill |
| 18 | Hydraulic travel kit |
| 19 | Hydraulic quick couplers |
| | |
| 41 | Side of the cover |
| 42 | Radial kidney slot in the side of the cover |
| 43 | Cover stone |
| 44 | Lock screw |
| 45 | Interlayer washer |
| 46 | Locknut |
| | |
| 81 | Mounting lug |
| 82 | Support flange |
| 83 | Weight screwed to the flange |
| 84 | Weight screwed to the lug |
| 86 | Mounting screw of the flange weight |
| 89 | Longer mounting screw of the flail hammer |
| | |
| 101 | Rail |
| 102 | Kidney slot |
| 103 | Kidney slot sliding mounting |
| 104 | Kidney slot support mounting |
| | |
| 110 | Square hole in the body wall |
| | |
| 181 | Actuator |
| 182 | Actuator bar |

## Claims

1. A flail mower having a body (1), a suspension frame (3), a hinged cover (4), with a flail shaft (8) placed inside the body (1), **characterized in that** the suspension frame (3) is slidably mounted on the body (1) through at least one rail (101) with kidney slots (102),
and also, the cover (4) is locked in a given position with locknuts (46) located on the side wall of the body (1) of the machine, wherein the screwed locknut (46) clamps the lock screw (44) on the side wall of the side (41), and in the side (41) there is a radial kidney slot (42) smoothly adjusting the position of the cover (4),
further, support flanges (82) with holes to which the balancing weights (83) are then screwed are welded before balancing at two ends of the flail shaft (8).

2. The mower according to claim 1, **characterised in that** the attachment of the suspension frame (3) to the machine body (1), which includes, among others, a rail (101), a kidney slot (102), a kidney slot sliding mounting (103), a kidney slot support mounting (104), an actuator (181), an actuator bar (182).

3. The mower according to any one of the preceding claims 1-2, **characterised in that** the kidney slot sliding mountings (103) are inserted into the kidney slots (102) of the rails, which are sliding inside the kidney slots (102) from the bottom of the rail (101) and kidney slot support mountings (104) are located flush with the kidney slot sliding mountings (103), at the same time the suspension frame (3) is attached to the rails (101).

4. The mower according to any one of the preceding claims 1-3, **characterised in that** the flail hammers (9) are arranged sequentially on the flail shaft (8) and secured along two opposing helical lines, using the flail hammer (9) mounting lugs (81) welded to the shaft (8) in a suitable helical sequence.

5. The mower according to any one of the preceding claims 1-4, **characterised in that** the flanges (82) are arranged alternately, wherein each flange (82) is provided with rows of mounting holes for positioning and screwing the weight (83).

6. The mower according to any of the preceding claims 1-5, **characterized in that** the movement of the suspension frame (3) relative to the body (1) is carried out hydraulically through the actuator.

7. The mower according to any of the preceding claims 1-6, **characterized in that** the body (1) is mounted on side skids (7) that are adjustable relative to the body (1).

8. The mower according to any of the preceding claims 1-7, **characterized in that** a bearing following and compacting roller (10) is attached to the side skids (7).

9. The mower according to any of the preceding claims 1-8, **characterized in that** between the skids (7) a scraper (11) is mounted with an adjustment of the gap between the edge of the scraper (11) and the copying shaft (10).

10. The mower according to any of the preceding claims 1-9, **characterized in that** in the cover (4), the stone (43) of the cover is embedded on the lock screw (44) and placed inside the kidney slot (42), and the square neck of the lock screw (44) is embedded in the square hole (110) of the side wall of the body (1).

11. The mower according to any of the preceding claims 1-10, **characterized in that** the flail shaft (8) has central weights (84) screwed directly to the attachment lugs (81).

12. The mower according to any one of the preceding claims 1-11, **characterized in that** the drive of the flail shaft (8) rotating in the opposite direction of travel is transmitted through the angular transmission (13), the bearing sleeve (14) and the V-belts (6).

13. The mower according to any one of the preceding claims 1-12, **characterized in that** the arrangement of the flail hammers (9) on the flail shaft (8) covers approximately 15 ÷ 25% of the working width of the flail hammer (9).

14. The mower according to any of the preceding claims 1-13, **characterized in that** a key cover (2) is attached to the body (1).

15. The shaft balancing process comprises the following stages:
a) Performing the required welding activities on the shaft related to the welding of the necessary elements,
b) Shaft cooling-period of thermal stabilization after welding,
c) Equipping the shaft with the desired elements,
d) Shaft balancing on the balancer-verification of parameters from the shaft balancing measurement,
e) Selection of balancing weights according to the indications of the balancer,
f) Mounting of the balancing weights in a defined place on the shaft,
**characterized in that**
in stage a) additional welding of the load-bearing flanges 82 alternating on the shaft is carried out, and the appropriate attachment of the balancing weights in stage f) consists in screwing the appropriate weights 83 to the load-bearing flanges 82 in the previously designed holes, according to the indications of the balancer, without the need to perform another welding process,
g) Angular positioning of the weights 83 on the support flanges 82, and securing them,
h) Verification of balancing and checking the selection of balancing weights 83 on the support flanges 82 in the full angular range of 360° of the shaft circumference.

16. The shaft balancing method according to claim 15, **characterized in that** additional central weights 84 are attached by being screwed directly to the attachment lugs 81 with longer mounting screws 89.
